# EUROPEAN PATENT SPECIFICATION

(11) **EP 2 070 748 B1**
(45) Date of publication and mention of the grant of the patent: **07.09.2011**
(21) Application number: 08021399.4
(22) Date of filing: 09.12.2008
(51) Int. Cl.: B60H 1/32

(54) **Air conditioner and control method for engine**
Klimaanlage und Steuerverfahren für einen Motor
Climatiseur et procédé de commande pour moteur

(30) Priority: 10.12.2007 JP 2007317970
(43) Date of publication of application: 17.06.2009
(73) Proprietor: Sanyo Electric Co., Ltd., Osaka 570-8677 (JP)
(72) Inventor: Nakajima, Katsunori, Gunma 370-0535 (JP)
(74) Representative: Glawe, Delfs, Moll

(56) References cited:
- EP-A- 1 574 698
- DE-A1- 4 407 595
- JP-A- 7 324 667
- US-A1- 2002 043 072
- US-A1- 2005 109 499

## Description

### BACKGROUND OF THE INVENTION

### 1. Field of the Invention

The present invention relates to an air conditioner for driving a compressor by a water cooling type engine to perform air-conditioning operation, and a method of controlling the engine.

### 2. Description of the Related Art

There has been known a gas heat pump type air conditioner in which a compressor is driven by a water cooling type engine using natural gas or the like as fuel to perform air-conditioning operation such as cooling operation, heating operation, etc. In this type of gas heat pump type air conditioner, the engine is started by a starter power supply having a power transformer, a rectifying circuit, a starter motor, etc. (for example, see JP-A-7-324667). According to the starter power supply device, when the engine is started, the voltage of a commercial power source is dropped by the power transformer, alternating current is rectified to direct current by the rectifying circuit, and the starter motor is driven by this direct current to start the engine. During air-conditioning operation, the start/stop of the engine is repeated in accordance with the load of the air-conditioning operation, and the compression of refrigerant by the compressor is controlled.

In winter season, a cold district, etc., when the temperature of engine oil is reduced in connection with reduction of the outdoor air temperature, the viscosity of the engine oil increases and thus it may be impossible for the engine oil to sufficiently lubricate the engine. In such a case, it is required to supply the starter motor with current which is set to a larger value than that at normal temperature to start the engine. Accordingly, it is required to provide a power transformer having a larger capacity to a starter power supply in an air conditioner suitable for use in a cold district (hereinafter referred to as "cold-district-purpose air conditioner") that that in an air conditioner suitable for standard use (hereinafter referred to as "standard air conditioner").

Furthermore, when the outdoor air temperature is remarkably reduced, it takes much time to start the engine for the same reason as described above. Therefore, an electrical heater is provided to a cold-district-purpose air conditioner. In this case, the surrounding portion of the engine is warmed by the electrical heater at the thermo-off time and the engine is quickly started at the thermo-on time. Furthermore, in order to keep the viscosity of the engine oil, cooling water for the engine is circulated at all times at the thermo-off time in place of or in combination with the warm-keeping operation of the electrical heater.

However, it causes cost-up that a large-capacity transformer or an electrical heater is provided to a cold-district-purpose air conditioner. Furthermore, it causes increase of power consumption that the surrounding of the engine portion is warmed at all times by the electrical heater at the thermo-off time and cooling water is circulated by driving a cooling water pump, and thus this is not preferable. US 2002/0 043 072 discloses an air conditioner upon which the preamble of appending claim 1 is based.

### SUMMARY OF THE INVENTION

An object of the present invention is to provide an air conditioner that can quickly start an engine even when the outdoor air temperature is low and also reduce the cost and the power consumption, and a method of controlling an engine used in the air conditioner.

In order to attain the above object, according to a first aspect of the present invention, an air conditioner (1) for driving a compressor (31, 31a, 31b) by a water cooling type engine (40) to perform air-conditioning operation is characterized by comprising a clutch (38, 38a, 38b) for connecting the engine and the compressor so that the engine and the compressor are connectable to and separable from each other, a cooling water temperature detector (61) for detecting the temperature of cooling water of the engine, and an engine controller (60a) for performing cooling water temperature managing processing of releasing the connection between the engine and the compressor through the clutch when the cooling water temperature of the engine detected in the cooling water temperature detector is lower than a predetermined reference value during stop of the operation of the engine, and operating the engine until the cooling water temperature of the engine reaches a predetermined target value.

The above air conditioner may further comprise a compressor operation start instructing input unit (60) for inputting a compressor operation starting instruction to the engine controller, wherein the engine controller connects the engine to the compressor through the clutch to transmit the driving force of the engine to the compressor when the compressor operation starting instruction is input to the engine controller through the compressor operation start instruction input unit before the cooling water temperature of the engine reaches the target value.

The above air conditioner may further comprise a time counter (T) for counting a predetermined time from the time at which the operation of the engine is started, wherein the engine controller stops the operation of the engine when the predetermined time is counted by the time counter before the cooling water temperature of the engine reaches the target value.

According to a second aspect of the present invention, a method of controlling a water cooling type engine (4) that is connected to a compressor (31, 31a, 31b) of an air conditioner (1) through a clutch (38, 38a, 38b) so that the engine and the compressor are connectable to and separable from each other is characterized by comprising a step of detecting the temperature of cooling water of the engine, and a step of performing cooling water temperature managing processing of releasing the connection between the engine and the compressor through the clutch when the cooling water temperature of the engine is lowered to a value lower than a predetermined reference value during stop of the operation of the engine, and operating the engine until the cooling water temperature of the engine reaches a target value.

According to the present invention, the clutch connects the water cooling type engine and the compressor so that the engine and the compressor are connectable to and separable from each other. The cooling water temperature detector detects the temperature of the cooling water of the engine. When the cooling water temperature detected by the engine cooling water temperature detector is reduced to a value lower than the preset reference value while the engine is stopped, the engine controller executes the following cooling water temperature managing processing. That is, the engine controller releases the connection between the engine and the compressor through the clutch (i.e., disconnect the engine from the compressor by the clutch) to thereby interrupt the transmission of the driving force of the engine to the compressor, and then operates the engine so that the temperature of the cooling water of the engine reaches the target value. Likewise, when the temperature of the cooling water of the engine is reduced to the reference value or less, the engine is operated by using the cooling water temperature managing processing to thereby warm the engine oil, so that the engine can be quickly started even when the outdoor temperature is low. Furthermore, when the outdoor air temperature is low, the viscosity of the engine oil can be kept to the viscosity required to lubricate the engine, and the capacity of the power transformer provided to the starter power supply can be reduced even in the air conditioner which is used under winter season in a cold district. Furthermore, it is unnecessary to provide a special part for warming the surrounding of the engine portion such as the electric heater or the like, and thus the cost can be reduced. Still furthermore, it is unnecessary that the surrounding of the engine portion is warmed by the electric heater at all times at the thermo-off time and also the cooling water is circulated at all times by the cooling water pump, and thus the power consumption at the thermo-off time can be reduced. Still furthermore, the air conditioner based on the cold-district specification and the air conditioner based on the standard specification can be made common to each other in specification, so that the cost for managing the stock can be reduced.

According to the present invention, for example when the operation start instruction of the compressor is input to the controller through the compressor operation start instruction input unit at the thermo-on time or the like, the engine and the compressor are connected to each other through the clutch, and the driving force of the engine is transmitted to the compressor, so that the compressor can be immediately driven and the air-conditioning operation can be executed.

Still furthermore, according to the present invention, the time count unit counts the predetermined time from the time point when the cooling water temperature managing processing is started by the engine controller. The engine controller stops the operation of the engine when the predetermined time is counted by the time count unit even before the cooling water temperature of the engine reaches the target value, and thus the fuel consumption of the engine can be suppressed.

As described above, the manufacturing cost of the air conditioner or the running cost and the power consumption at the thermo-off time can be reduced.

### BRIEF DESCRIPTION OF THE DRAWINGS

Fig. 1 is diagram showing a refrigerant circuit and a cooling water circuit of an air conditioner according to an embodiment of the present invention;
Fig. 2 is a diagram showing a surrounding construction of an engine equipped to the air conditioner of the present invention; and
Fig. 3 is a flowchart showing the flow of cooling water temperature managing processing according to the present invention.

### DETAILED DESCRIPTION OF THE PREFERRED EMBODIMENT

A preferred embodiment according to the present invention will be described hereunder with reference to the accompanying drawings.

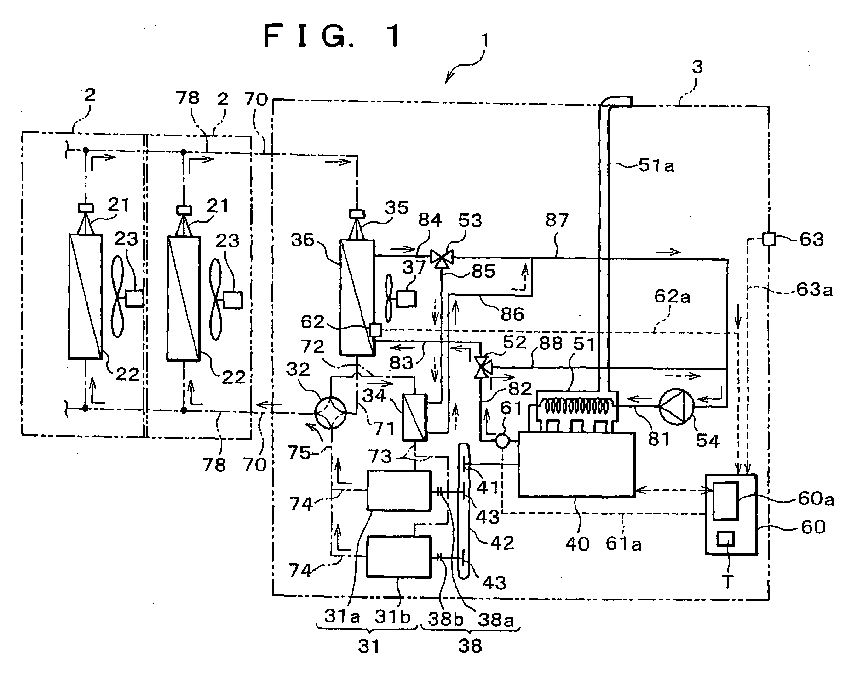

Fig. 1 is a diagram showing the construction of an air conditioner 1 according to an embodiment of the present invention. The air conditioner 1 shown in Fig. 1 is a gas heat pump type air conditioner 1, and it has plural indoor units 2 and one outdoor unit 3.

Each indoor unit 2 has an indoor heat exchanger 22 provided with a flow divider 21, an air blower 23 for blowing air to the indoor heat exchanger 22, etc.

Furthermore, the outdoor unit 3 has a compressor 31, an electromagnetic type four-way valve 32, a plate heat exchanger 34, an outdoor heat exchanger 36 provided with a flow divider 35, an air blower 37 for blowing air to the outdoor heat exchanger 36, etc. The compressor 31 has a first compressor 31a and a second compressor 31b, and the first compressor 31a and the second compressor 31b are connected to a gas engine 40 through electromagnetic clutches 38 (first clutch 38a and second clutch 38b) so as to be connectable to and separable from the gas engine 40. It is preferable that the first compressor 31a and the second compressor 31b have different treating capacities. The compressors 31 having the different treating capacities (the first compressor 31a, the second compressor 31b) are connected to the gas engine 40 through the clutches 38 (the first clutch 38a, the second clutch 38b), whereby the compressor having a proper treating capacity can be selected as the compressor to be driven in accordance with the air-conditioning load. Therefore, COP (Coefficient of Performance) of the air conditioner 1 can be enhanced.

The refrigerant circuit of the air conditioner 1 is constructed by the indoor heat exchangers 22, the compressor 31, the four-way valve 32, the plate heat exchanger 34, the outdoor heat exchanger 36, etc., and each indoor unit 2 and the outdoor unit 3 are connected to each other through a refrigerant pipe 70.

In addition to the respective parts constituting the refrigerant circuit, the outdoor unit 3 is further equipped with a gas engine 40 for transmitting driving force through the clutch 38 to the compressor 31, an exhaust gas heat exchanger 51 for performing heat exchange by using waste heat of the gas engine 40, a thermostat 52, an electrically-operated three-way valve 53, an electrically-operated cooling water pump 54, etc., and these parts constitute a cooling water circuit. An exhaust pipe 51a is connected to the exhaust gas heat exchanger 51 through a drain filter (not shown), and a cooling water tank (not shown) is connected to the cooling water pump 54 through a pipe (not shown).

The outdoor unit 3 has a central control unit 60 (compressor operation start instructing signal input unit) for controlling the driving of the four-way valve 32, the three-way valve 53, the air blower 37, the clutch 38, etc. through control lines (not shown). The central control unit 60 has CPU (not show), an input/output interface, ROM, RAM, a timer counter T (time counting unit), etc., and controls the operation/stop of the gas engine 40, the connection state of the gas engine 40 and the compressor 31 through the clutch 38, etc. Furthermore, the central control unit 60 has an engine controller 60a for executing cooling water temperature managing processing described later.

The input/output interface of the central controller 60 is connected to a water temperature sensor 61 (cooling water temperature detector) provided to a cooling water pipe 82 between the gas engine 40 and the thermostat 52, a heat exchange temperature sensor 62 that is secured to the outdoor heat exchanger 36 and detects the surface temperature of a radiation fin (not shown) of the outdoor heat exchanger 36, an outdoor air temperature sensor 63 secured to the outer wall surface of the outdoor unit 3, etc. The central control unit 60 is connected to a control unit (not shown) at the indoor unit 2 side to mutually receive/transmit signals from/to the control unit 2, performs the switching operation of the four-way valve 32, the three-way valve 53, etc. so that the air-conditioning operation set by the control unit, etc. can be performed, and controls the respective parts so that the temperature in each room is set to an air conditioning set temperature.

Here, when it is judged by the central control unit 60 that it is necessary to drive the compressor 31 because the indoor temperature does not reach the air-conditioning set temperature or the like, a thermo-on signal, that is, a compressor operation start signal is input from the central control unit 60 to the engine controller 60a. Here, the central control unit 60 outputs to the engine controller 60a a control signal for instructing to select any one or both of the first compressor 31a and the second compressor 31b so as to obtain a proper treating capacity corresponding to an air-conditioning load and drive the selected compressor 31. The engine controller 60a transmits a control signal to the gas engine 40 according to the control signal input from the central control unit 60, and drives a starter motor STR to start the gas engine. Furthermore, the engine controller 60a supplies a control signal and driving current to the clutch 38 out of the first and second clutches 38a and 38b through which the compressor 31 selected by the central control unit 60 is joined to the gas engine 40, thereby driving the clutch 38 concerned to switch the electromagnet to ON, whereby the driving force of the gas engine 40 is transmitted to any selected one or both of the first compressor 31a and the second compressor 31b.

Furthermore, when the central control unit 60 determines that it is necessary to stop the operation of the compressor 31 in accordance with the air-conditioning load because the indoor temperature exceeds the air-condition set temperature or the like, a thermo-off signal, that is, a compressor stop instructing signal is input from the central control unit 60 to the engine controller 60a. When the compressor stop instructing signal is input, the engine controller 60a stops the compressor 31 under operation, and thus the supply of the driving current to the clutch 38 under the connection state (out of the first clutch 38a and the second clutch 38b) is stopped, and the connection between the gas engine 40 and the compressor 31 is released (i.e., they are disconnected from each other), thereby interrupting the transmission of the driving force to the compressor 31. At the same time, the engine controller 60a transmits a control signal to the gas engine 40 to stop the operation of the gas engine 40.

Next, the flow of refrigerant and cooling water under heating operation in the thus-constructed air conditioner 1.

In connection with start of the heating operation, refrigerant flowing from the refrigerant pipe 70 to the outdoor unit 3 side first passes through the flow divider 35 at the outdoor unit 2 side, the outdoor heat exchanger 36, the refrigerant pipe 71, the four-way valve 32 and the refrigerant pipe 72 and then flows into the plate heat exchanger 34. The refrigerant is heated while passing through the outdoor heat exchanger 36 and the plate heat exchanger 34. A double-pipe type heat exchanger in which cooling water passes along the surrounding of the refrigerant pipe is adopted as the plate heat exchanger 34, and a plate fin type heat exchanger in which the refrigerant pipe and the cooling water pipe are connected to each other through a plate fin is adopted as the outdoor heat exchanger 36.

The refrigerant heated while passing through the outdoor heat exchanger 36 and the plate heat exchanger 34 passes through the refrigerant pipe 73 and flows into the compressor 31. The refrigerant is compressed and further heated in the compressor 31. Then, the high-temperature refrigerant discharged from the compressor 31 passes through the refrigerant pipe 74, the four-way valve 32 and the refrigerant pipe 70 and flows into the indoor heat exchanger 22 at the indoor unit 2 side. The refrigerant is heat-exchanged with indoor air blown by the air blower 23 to heat the indoor air, and then flows from the refrigerant pipe 70 to the outdoor unit 3 side again.

Under heating operation of the air conditioner 1, the refrigerant is circulated in the refrigerant circuit as described above, and the cooling water flows in the cooling water circuit as follows.

First, the cooling water discharged from the cooling pump 54 passes through a cooling water pipe 81 and flows into the exhaust gas heat exchanger 51, and it is heated by the exhaust gas of the gas engine 40 and then flows into the cooling water passage in the gas engine 40. The cooling water which cools the gas engine 40 and thus increases in temperature passes through the cooling water pipe 82, the thermostat 52 and the cooling water pipe 83 and then flows into the outdoor heat exchanger 36 to discharge heat energy. The cooling water which discharges the heat energy while passing through the outdoor heat exchanger 36 passes through the cooling water pipe 84, the three-way valve 53 and the cooling water pipe 85 and then is circulated into the cooling water pump 54.

At this time, when the three-way valve 53 is switched by the central control unit 60, cooling water passes through a cooling water pipe 85 and flows into the plate heat exchanger 34 to discharge the heat energy, and then it is passed through cooling water pipes 86, 87 and circulated into the cooling water pump 54. Furthermore, the cooling water does not flow to the outdoor heat exchanger 36 side, and all the amount of the cooling water is passed from the thermostat 52 through a bypass pipe 88 and circulated into the cooling water pump 54 until the temperature of the cooling water at the outlet of the gas engine 40 reaches a lower limit set value (for example, 60°C). When the cooling water temperature is between the lower limit set value and an upper limit set value (for example, 70°), the cooling water flows from the thermostat 52 into both the bypass pipe 88 and the cooling water pipe 83, and at the time point at which the cooling water temperature exceeds the upper limit set temperature, all the amount of the cooing water flows into the cooling water pipe 83.

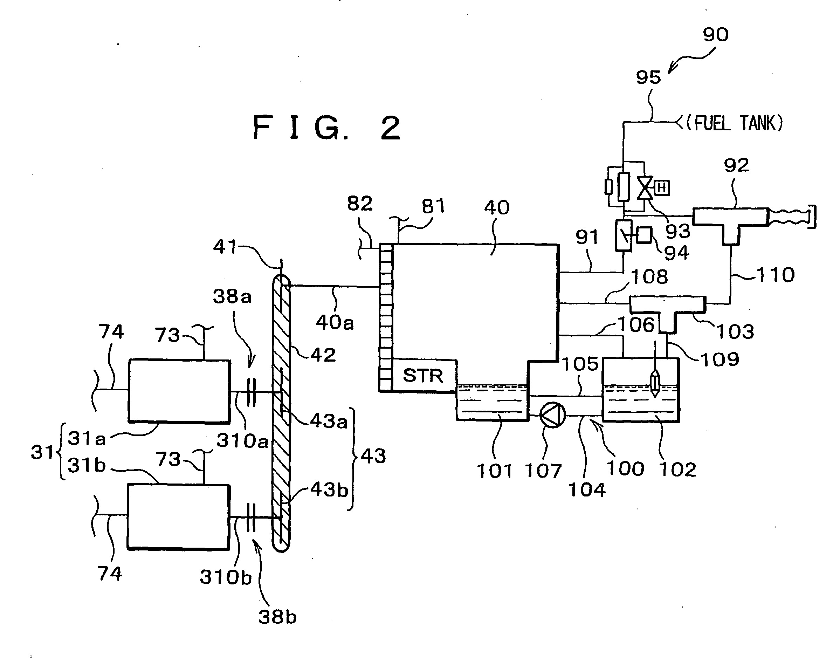

Next, the construction of the surrounding portion of the gas engine 40 will be described with reference to Fig. 2.

The gas engine 40 is connected to the compressor 31 (31a, 31b) through the electromagnetic clutch 38 (38a, 38b) so as to be connected to and separated from the compressor 31, and transmits the driving force thereof to the first compressor 31a and/or the second compressor 31b through the first clutch 38a and/or the second clutch 38b, whereby the compressor 31 compresses the refrigerant to perform various kinds of air-conditioning operation such as heating operation, cooling operation, etc. Specifically, the output shaft 40a of the gas engine 40 is connected to the input shafts 310a, 310b of the compressor 31 (31a, 31b) through a pulley 41, a belt 42, a pulley 43 (43a, 43b) and the clutch 38 (38a, 38b).

An air intake pipe 91 is connected to the air intake system of the gas engine 40, and an air cleaner 92 is disposed at the upstream side of the intake pipe 91 while a stepping motor 94 is disposed at the downstream side of the air intake pipe 91. A fuel supply pipe 95 is connected to the air intake pipe 91 between the air cleaner 92 and the stepping motor 94, and a fuel adjusting valve 93 is disposed in the fuel supply pipe 95. Fuel gas supplied from a fuel tank (not shown) through the fuel supply pipe 95 is mixed with outdoor air passing through the air cleaner 92 and then supplied to the gas engine 40.

The gas engine 40 is provided with an engine oil circulating device 100 for circulating and supplying engine oil. The engine oil circulating device 100 has a main oil pan 101 disposed at the bottom portion of the gas engine 40, a sub oil pan 102 and an oil catcher 103.

The bottom portion of the main oil pan 101 and the bottom portion of the sub oil pan 102 are connected to each other through an oil feed pipe 104 and a return pipe 105. The upper space of the main oil pan 101 and the upper space of the sub oil pan 102 are connected to each other through an equalizer line so as to communicate with each other. A circulating pump 107 is disposed in the oil feed pipe 104, and engine oil in the sub oil pan 102 is fed through the oil feed pipe 104 to the main oil pan 101 of the gas engine 40 by the circulating pump 107. Since the upper space of the main oil pan 101 and the upper space of the sub oil pan 102 communicate with each other through the equalizer line 106, so that the engine oil supplied to the main oil pan 101 by the circulating pump 107 is returned to the sub oil pan 102 through the return pipe while the oil level of the engine oil in the main oil pan 101 is balanced with the oil level of the engine oil in the sub oil pan 102.

The oil catcher 103 separates engine oil from blow-by gas discharged from the gas engine 40, and it is connected to the gas engine 40 through an exhaust pipe 108. The engine oil separated from the oil catcher 103 is circulated into the sub oil pan 102 through the circulating pipe 109. The exhaust pipe 108, the oil catcher 103, the circulating pipe 109, etc. constitute a blow-by gas circulating circuit. The blow-by gas from which the engine oil is separated and removed is supplied to the air filter through an air pipe 110, and returned to the air intake system of the gas engine 40.

In winter season, a cold district or the like, the outdoor air temperature may be reduced to -10° or less. When the outdoor air temperature is reduced as described above, the temperature of the cooling water and the temperature of the engine oil are reduced in connection wit the decrease of the outdoor air temperature. When the temperature of the engine oil decreases and thus the viscosity of the engine oil increases, the gas engine 40 cannot be sufficiently lubricated by the engine oil, and thus there is a case where current having a larger value is required to be supplied from the starter power supply device (not shown) to drive the starter motor STR or it is impossible to quickly start the gas engine 40.

Therefore, according to this embodiment, when the cooing water temperature decreases to a value lower than a preset reference value under the stop state of the engine (at the thermo-off time), the following cooling water temperature managing processing is carried out. That is, the connection between the gas engine 40 and the compressor 31 is released (disconnected) by the clutch 38 to interrupt the transmission of the driving force to the compressor 13 and then the gas engine 40 is operated until the cooling water temperature reaches a target reference value.

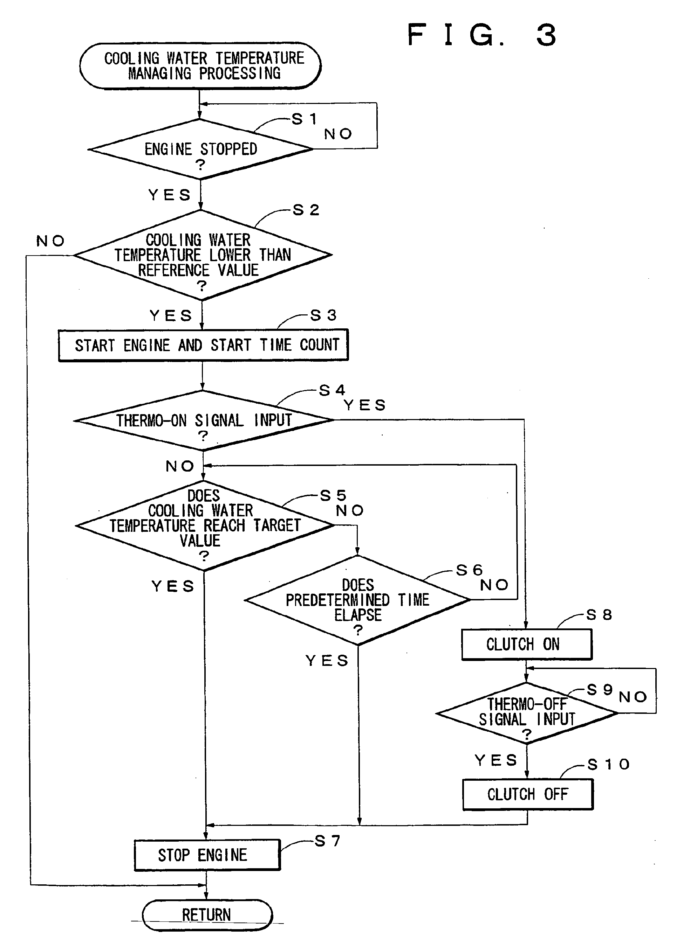

The cooling water temperature managing processing will be described hereunder with reference to Fig. 3.

First, the engine controller 60a determines whether the operation of the engine is being stopped or not at present, that is, the present state is a thermo-off state or not (step S1). If it is determined the present state is the thermo-off state (step S1: Y), the engine controller 60a determines on the basis of the cooling water temperature input from the water temperature sensor 61 whether the cooling water temperature of the gas engine 40 is lower than a reference value (for example, -10°C) or not (step S2).

Here, the reference value can be properly set in accordance with the characteristic of the engine oil. The corresponding relationship between the cooling water temperature and the temperature of the engine oil or the corresponding relationship between the cooling water temperature and the viscosity of the engine oil is determined in advance by an experiment or the like, and the reference value can be properly set on the basis of the lower limit value of a usable temperature range of the engine oil, the upper limit value of a usable viscosity range of the engine oil or the like.

If it is determined in step S2 that the cooling water temperature is lower than the reference value (step S2: Y), the engine controller 60a transmits a control signal to the gas engine 40, and drives the starter STR to start the gas engine 40. In connection with this operation, the time counting is started by a timer counter T (step S3).

Subsequently, when the engine controller 60a is not supplied with any thermo-on signal, that is, any compressor operation start signal (step S4: N) from the central control unit 60, the engine controller 60a determines on the basis of the cooling water temperature input from the water temperature sensor 61 whether the cooling water temperature reaches a preset target value (for example, 50°C) (step S5).

However, the target value can be properly set in accordance with the characteristic of the engine oil. It is preferable that the corresponding relationship between the cooling water temperature and the temperature of the engine oil or the like is predetermined and the target value is set so that the engine oil has such viscosity that the engine can be sufficiently lubricated.

When it is determined that the cooling water temperature reaches the preset target value (step S5 : Y), the engine controller 60a transmits a control signal to the gas engine 40 to stop the operation of the gas engine 40 (step S7).

On the other hand, when it is determined in step S5 that the cooling water temperature does not reach the preset target value (step S5: N), the engine controller 60a determines on the basis of the time counted by the timer counter T whether a predetermined time (for example, 5 minutes) elapses (step S6).

Here, the predetermined time may be determined as follows. That is, a standard time required to increase the cooling water temperature of the gas engine 40 to the target value when the cooling water temperature of the gas engine 40 is lowered to a value lower than the reference value is determined by an experiment or the like in advance, and the predetermined time is set on the basis of the standard time. However, in the air conditioner 1 of this embodiment, if the gas engine 40 is operated by about 3 minutes (standard time), the cooling water temperature can be increased to 50°C as the target value from the state that the cooling water temperature is reduced to -10°C as the reference value.

In step S6, if it is determined that the predetermined time does not elapse (step s6: N), the engine controller 60a transmits a control signal to the gas engine 40 to stop the operation of the gas engine 40 even before the cooling water temperature reaches the target value (step S7).

On the other hand, when the thermo-on signal is input from the central control device 60, that is, the compressor operation start instructing signal is input in step S4 (step S4: Y), the engine controller 60a drives the first compressor 31a and/or the second compressor 31b in accordance with the air-conditioning load. Therefore, the engine controller 60a supplies the control signal and the driving current to the clutch 38 corresponding to the compressor 31 to be driven, connects the gas engine 40 to the compressor 31 and transmits the driving force of the gas engine 40 to the predetermined compressor 31 to start the compression of the refrigerant (step S8). Then, the engine controller 60a continues to drive the compressor 31 until it is supplied with the thermo-off signal, that is, the compressor stop instructing signal from the central control unit 60. When the thermo-off signal is input from the central control unit 60 in accordance with the air-conditioning load (step S9: Y), the engine controller 60a transmits a control signal to the clutch 38 corresponding to the compressor 31 which is currently connected to the gas engine 40, and also it interrupts the supply of the driving current to release the connection between the gas engine 40 and the compressor 31 (step S10), and transmits a control signal to the gas engine 40 to stop the operation of the gas engine 40 (step S7).

As described above, according to the above embodiment, the clutch 38 connects the water cooling type gas engine 40 to the compressor 31 so as to be connectable to and separable from the compressor 31. The engine controller 60a detects the cooling water temperature on the basis of the detection signal input from the water temperature sensor 61. When the cooling water temperature is lower than the preset reference value at the thermo-off time (during stop of the engine), the engine controller 60a releases the connection between the gas engine 40 and the compressor 31 by the clutch 38 to interrupt the transmission of the driving force from the gas engine 40 to the compressor 31, and then executes the cooling water temperature managing processing of driving the gas engine 40 until the temperature of the cooling water of the gas engine 40 reaches the preset target value.

As described above, when the temperature of the cooling water of the gas engine 40 is reduced to the reference value or less, the gas engine 40 can be operated to warm the engine oil through the cooling water temperature managing processing. Therefore, even when the outdoor air temperature is low, the gas engine 40 can be quickly started. Furthermore, even when the outdoor air temperature is low, the viscosity of the engine oil can be kept to the viscosity required to lubricate the gas engine 40. Therefore, with respect to even the air conditioner 1 used under winter season in a cold district, the capacity of the power transformer provided to the starter power supply for driving the starter motor STR can be reduced, and it is unnecessary to provide a special part for warming the surrounding portion of the gas engine 40, such as an electrical heater or the like, and thus the cost can be reduced. Furthermore, it is unnecessary that the surrounding of the gas engine 40 portion is warmed by the electrical heater at all times at the thermo-off time and the cooling water is circulated at all times by the cooling water pump 54, and thus the power consumption at the thermo-off time can be reduced. Furthermore, the air conditioner based on the cold-district specification and the air conditioner based on the standard specification can be made common in specification, so that the cost for managing the stock can be reduced.

Furthermore, according to the above embodiment, when the thermo-on instructing signal is input from the central control unit 60 to the engine controller 60a in accordance with the air-conditioning load, the gas engine 40 and the compressor 31 are connected to each other by the clutch 38 even before the cooling water temperature reaches the target value, and the driving force of the gas engine 40 is transmitted to the compressor 31, whereby the compressor 31 is immediately driven and the room can be kept comfortable so that the indoor temperature reaches the air-conditioning set temperature.

Still furthermore, according to the above embodiment, the engine controller 60a stops the operation of the engine 40 when it is determined on the basis of the time counted by the timer counter T that the predetermined time elapses, and thus the fuel consumption of the gas engine 40 can be suppressed. Furthermore, even when the cooling water temperature cannot be correctly detected because the water temperature sensor 61 is under trouble or the like, the operation of the gas engine 40 is stopped when the predetermined time elapses, so that the needless fuel consumption of the gas engine 40 can be suppressed.

As described above, the above embodiment is an example of the present invention, and the present invention is not limited to the above embodiment. Various kinds of modifications and alterations may be made to the above embodiment.

For example, in the above embodiment, the air conditioner 1 has plural indoor units 2. The number of the indoor units 2 is not limited to a specific value, and one indoor unit 2 may be connected to one outdoor unit 3.

Furthermore, the present invention is not limited to the air conditioner 1 having the refrigerant circuit and the cooling water circuit described with reference to the above embodiment, and it may be applied to any type air conditioner insofar as the compressor 31 is driven by a water cooling type engine in the air conditioner.

## Claims

1. An air conditioner (1) comprising a water cooling type engine (40) driving a compressor (31, 31 a, 31 b) to perform air-conditioning operation;
a clutch (38, 38a, 38b) for connecting the engine and the compressor so that the engine and the compressor are connectable to and separable from each other;
a cooling water temperature detector (61) for detecting the temperature of cooling water of the engine; and
an engine controller (60a); **characterized in** the engine controller (60a) performing cooling water temperature managing processing of releasing the connection between the engine and the compressor through the clutch when the cooling water temperature of the engine detected in the cooling water temperature detector is lower than a predetermined reference value during stop of the operation of the engine, and operating the engine until the cooling water temperature of the engine reaches a predetermined target value.

2. The air conditioner according to claim 1, further comprising a compressor operation start instructing input unit (60) for inputting a compressor operation starting instruction to the engine controller, wherein the engine controller connects the engine to the compressor through the clutch to transmit the driving force of the engine to the compressor when the compressor operation starting instruction is input to the engine controller through the compressor operation start instruction input unit before the cooling water temperature of the engine reaches the target value.

3. The air conditioner according to claim 1, further comprising a time counter (T) for counting a predetermined time from the time at which the operation of the engine is started, wherein the engine controller stops the operation of the engine when the predetermined time is counted by the time counter before the cooling water temperature of the engine reaches the target value.

4. A method of controlling a water cooling type engine (4) that is connected to a compressor (31, 31a, 31b) of an air conditioner (1) through a clutch (38, 38a, 38b) so that the engine and the compressor are connectable to and separable from each other, **characterized by** comprising:
a step of detecting the temperature of cooling water of the engine; and
a step of performing cooling water temperature managing processing of releasing the connection between the engine and the compressor through the clutch when the cooling water temperature of the engine is lowered to a value lower than a predetermined reference value during stop of the operation of the engine, and operating the engine until the cooling water temperature of the engine reaches a target value.

## Patentansprüche

1. Klimaanlage (1) mit einer Maschine (40) vom Wasserkühlungstyp, die einen Kompressor (31, 31a, 31b) zum Durchführen eines Luftklimatisierungsvorgangs antreibt,
eine Kupplung (38, 38a, 38b) zum Verbinden der Maschine und des Kompressors derart, dass die Maschine und der Kompressor verbindbar und voneinander trennbar sind,
einem Kühlwassertemperaturdetektor (61) zum Erfassen der Temperatur von Kühlwasser in der Maschine und
einer Maschinensteuerung (60a), **dadurch gekennzeichnet, dass** die Maschinensteuerung (60a) einen Kühlwassertemperaturverwaltungsprozess zum Lösen der Verbindung zwischen der Maschine und dem Kompressor durch die Kupplung durchführt, wenn die Kühlwassertemperatur der Maschine, die in dem Kühlwassertemperatur der Maschine, die in dem Kühlwassertemperaturdetektor erfasst wird, geringer ist als ein vorgegebener Bezugswert während des Anhaltens des Betriebs der Maschine ist und die Maschine betreibt, bis die Kühlwassertemperatur der Maschine einen vorgegebenen Zielwert erreicht.

2. Klimaanlage nach Anspruch 1 mit ferner einer Kompressorbetriebsstartbefehlseingabeeinheit (60) zum Eingeben eines Kompressorbetriebsstartbefehls an die Maschinensteuerung, wobei die Maschinensteuerung die Maschine mit dem Kompressor über die Kupplung verbindet, um die Antriebskraft der Maschine an den Kompressor zu übertragen, wenn der Kompressorbetriebsstartbefehl an die Maschinensteuerung über die Kompressorbetriebsstartbefehlseingabeeinheit eingegeben wird, bevor die Kühlwassertemperatur der Maschine den Zielwert erreicht.

3. Klimaanlage nach Anspruch 1 mit ferner einem Zeitzähler (T) zum Zählen einer vorgegebenen Zeit von der Zeit an, bei der der Betrieb der Maschine gestartet wird, wobei die Maschinensteuerung den Betrieb der Maschine anhält, wenn die vorgegebene Zeit durch den Zeitzähler gezählt wird, bevor die Kühlwassertemperatur der Maschine den Zielwert erreicht.

4. Verfahren zum Besteuern einer Maschine (4) vom Wasserkühlungstyp, die mit einem Kompressor (31, 31a, 31b) einer Klimaanlage (1) über eine Kupplung (38, 38a, 38b) derart verbunden ist, dass die Maschine und der Kompressor verbindbar sind und voneinander trennbar sind, **gekennzeichnet durch**:
einem Schritt der Erfassung der Temperatur von Kühlwasser der Maschine und
einem Schritt der Durchführung einer Kühlwassertemperaturverwaltungsverarbeitung zum Lösen der Verbindung zwischen der Maschine und dem Kompressor über die Kupplung, wenn die Kühlwassertemperatur der Maschine auf einen Wert abgesenkt wird, der geringer ist als ein vorgegebener Bezugswert während des Anhaltens des Betriebs der Maschine, und Betreiben der Maschine bis die Kühlwassertemperatur der Maschine einen Zielwert erreicht.

## Revendications

1. Climatiseur (1) comprenant un moteur du type à refroidissement à eau (40) entraînant un compresseur (31, 31a, 31b) afin d'assurer un fonctionnement en climatisation ;
un embrayage (38, 38a, 38b) destiné à coupler le moteur et le compresseur de telle sorte que le moteur et le compresseur peuvent être couplés et séparés l'un par rapport à l'autre ;
un détecteur de température d'eau de refroidissement (61) destiné à détecter la température d'eau de refroidissement du moteur ; et
une unité de commande de moteur (60a) ; **caractérisé en ce que** l'unité de commande de moteur (60a) exécute un traitement de gestion de température d'eau de refroidissement consistant à libérer le couplage entre le moteur et le compresseur par l'intermédiaire de l'embrayage lorsque la température d'eau de refroidissement du moteur détectée par le détecteur de température d'eau de refroidissement est inférieure à une valeur de référence prédéterminée au cours de l'arrêt de fonctionnement du moteur, et à activer le moteur jusqu'à ce que la température d'eau de refroidissement du moteur atteigne une valeur de consigne prédéterminée.

2. Climatiseur selon la revendication 1, comprenant, en outre, une unité d'entrée d'instruction d'initiation de fonctionnement de compresseur (60) destinée à entrer une instruction d'initiation de fonctionnement de compresseur sur l'unité de commande de moteur, dans lequel l'unité de commande de moteur couple le moteur au compresseur par l'intermédiaire de l'embrayage de manière à transmettre le couple d'entraînement du moteur au compresseur lorsque l'instruction d'initiation de fonctionnement de compresseur est entrée dans l'unité de commande de moteur par l'unité d'entrée d'instruction d'initiation de fonctionnement de compresseur avant que la température d'eau de refroidissement du moteur atteigne la valeur de consigne.

3. Climatiseur selon la revendication 1, comprenant, en outre, un dispositif de temporisation (T) destiné à décompter une durée prédéterminée à partir du moment auquel le fonctionnement du moteur est initié, dans lequel l'unité de commande de moteur arrête le fonctionnement du moteur lorsque la durée prédéterminée est décomptée par le dispositif de temporisation avant que la température d'eau de refroidissement du moteur atteigne la valeur de consigne.

4. Procédé de commande d'un moteur du type à refroidissement à eau (4) qui est couplé à un compresseur (31, 31a, 31b) d'un climatiseur (1) par l'intermédiaire d'un embrayage (38, 38a, 38b) de telle sorte que le moteur et le compresseur peuvent couplés et séparés l'un par rapport à l'autre, **caractérisé par le fait qu'**il comprend :
une étape de détection de la température de l'eau de refroidissement du moteur ; et
une étape d'exécution d'un traitement de gestion de température d'eau de refroidissement consistant à libérer le couplage entre le moteur et le compresseur par l'intermédiaire de l'embrayage lorsque la température d'eau de refroidissement du moteur a diminué à une valeur inférieure à une valeur de référence prédéterminée au cours de l'arrêt du fonctionnement du moteur, et à activer le moteur jusqu'à ce que la température d'eau de refroidissement du moteur atteigne une valeur de consigne.
